(19) Europäisches Patentamt
European Patent Office
Office européen des brevets

(11) **EP 2 929 362 B1**

(12) **EUROPÄISCHE PATENTSCHRIFT**

(45) Veröffentlichungstag und Bekanntmachung des Hinweises auf die Patenterteilung:
**27.01.2021 Patentblatt 2021/04**

(21) Anmeldenummer: **13823928.0**

(22) Anmeldetag: **02.12.2013**

(51) Int Cl.:
*G01S 3/786* (2006.01)    *G01C 21/02* (2006.01)
*G06T 7/70* (2017.01)

(86) Internationale Anmeldenummer:
**PCT/DE2013/100403**

(87) Internationale Veröffentlichungsnummer:
**WO 2014/086340 (12.06.2014 Gazette 2014/24)**

(54) **VERFAHREN ZUR AUTOMATISCHEN KORREKTUR VON AUSRICHTUNGSFEHLERN IN STERNSENSORSYSTEMEN**

METHOD FOR AUTOMATICALLY CORRECTING ORIENTATION ERRORS IN STAR SENSOR SYSTEMS

PROCÉDÉ DE CORRECTION AUTOMATIQUE D'ERREURS D'ORIENTATION DANS LES SYSTÈMES DE VISEURS D'ÉTOILES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.12.2012 DE 102012111752**

(43) Veröffentlichungstag der Anmeldung:
**14.10.2015 Patentblatt 2015/42**

(73) Patentinhaber: **Jena Optronik GmbH**
**07745 Jena (DE)**

(72) Erfinder:
• **STRIETZEL, Roland**
**02689 Sohland (DE)**
• **MICHEL, Klaus**
**07747 Jena (DE)**
• **RATZSCH, Dietmar**
**07751 Wogau (DE)**

(74) Vertreter: **Ege Lee & Partner**
**Patentanwälte PartGmbB**
**Walter-Gropius-Straße 15**
**80807 München (DE)**

(56) Entgegenhaltungen:
**US-A1- 2006 149 474    US-B1- 6 470 270**
**US-B1- 6 691 033**

EP 2 929 362 B1

**Beschreibung**

Die Erfindung betrifft ein Verfahren zur automatischen Korrektur von Ausrichtungsfehlern in Sensorsystemen, die aus mehreren Sternsensoren bestehen.

Aus der EP 1 111 402 A1 ist ein Sensorsystem bekannt, bei dem drei Sternsensoren mit in unterschiedliche Richtungen ausgerichteten Gesichtsfeldern angeordnet sind, wobei jeder Sternsensor die Sternpositionen erfasst und diese an eine zentrale Auswerteeinrichtung ausgibt, in der die Lage des Sensorsystems ermittelt und aus der Ausrichtung des Sensorsystems gegenüber einem Flugobjekt die Lage des Flugobjekts ermittelt wird. Die Sternkameras befinden sich zur Vermeidung zusätzlicher Fehler auf einem festen Block. Untersuchungen zum Einfluss von Ausrichtungsfehlern der Blickrichtungen der einzelnen Sternsensoren werden nicht durchgeführt. Wenn die Sensoren auf einem stabilen Block montiert und mit den bekannten optischen Methoden justiert sind, treten praktisch keine Ausrichtungsfehler auf. Wenn die Ausrichtungsfehler in die Größenordnung der Messgenauigkeit der Sternpositionen kommen, dann reduzieren sie die Messgenauigkeit des Sensorsystems wesentlich.

Auf Grund unterschiedlicher Bauweisen von Flugobjekten ist es praktisch nicht immer möglich, die Sternsensoren auf einen stabilen Block zu montieren, so dass unter Einhaltung geforderter Blickrichtungen der einzelnen Sensoren diese an unterschiedlichen Stellen der Plattform angeordnet werden müssen. Ausrichtungsfehler entstehen dann hauptsächlich durch Deformationen infolge mechanischer Belastungen oder Temperaturschwankungen. Da die Lage des Flugobjektes entscheidend für die Erfüllung der vorgesehenen Mission ist, wird eine hohe Messgenauigkeit und Zuverlässigkeit des Sensorsystems gefordert. Auch kann bei großen Objekten die exakte optische Ausrichtung problematisch sein.

Da die Lagebestimmung sehr entscheidend für die Realisierung von geplanten Missionen ist, kommt der Vermeidung von Ausrichtungsfehlern einzelner Sternsensoren und damit der Erhöhung der Messgenauigkeit derartiger Sternsysteme eine besondere Bedeutung zu. Die Sternsensoren bestehen aus einer Optik, einem lichtempfindlichen Matrixdetektor und einer Auswerteeinrichtung zur Berechnung von Lageinformationen des Flugobjekts anhand eines Vergleichs der erfassten Sternbildausschnitte mit einem Sternkatalog, der auf einem Inertialsystem basiert. Durch die Anwendung mehrerer Sternsensoren in einem Sternsystem lässt sich die Messgenauigkeit der Lage (Orientierung) bedeutend erhöhen, wenn man die Informationen der einzelnen Sensoren geeignet verknüpft.

Eine Lagebestimmung von Flugobjekten wie beispielsweise Satelliten, Raumstationen, Raumfähren und dergleichen erfolgt mittels eines Verfahrens unter Auswertung der Daten eines oder mehrerer Sternsensoren, die mittels eines vorgegebenen Gesichtsfeldes auf einen Ausschnitt des Sternhimmels, im Folgenden Sternbildausschnitt, ausgerichtet sind und mittels Bilderkennung den in einem Matrixdetektor erfassten Sternbildausschnitt mit einem in einem Speicher vorgehaltenen Sternkatalog vergleichen. Nach Zuordnung des Sternbildausschnitts wird die Lage des Flugobjekts ermittelt, indem beispielsweise nach dem QUEST-Algorithmus aus den gemessenen Sternvektoren und den Daten des Sternkatalogs die Eulerwinkel und/oder Quaternionen bestimmt und vom Koordinatensystem des Sternsensorsystems auf das Koordinatensystem des Flugobjekts transformiert werden. Je mehr Sterne in dem Sensorsystem ausgewertet werden, umso größer ist seine Messgenauigkeit. Durch Ausrichtung der einzelnen Sternsensoren in verschiedene Blickrichtungen erreicht man, dass die Fehler der drei Raumwinkel (Eulerwinkel) der vom Sternsensorsystem ermittelten Lage etwa gleich groß und minimal sind.

Aus der US 6,691,033 B1 ist eine Vorrichtung und ein Verfahren zur Kalibration einer Fehlausrichtung von Sternsensoren in einer Lageregelungseinrichtung bekannt, wobei ein Referenzrahmen durch die Mittelachse eines ersten Sternsensors und die Mittelachse eines zweiten Sternsensors definiert wird und eine Abweichung der Ausrichtung der Sternsensoren anhand einer Rotation des Referenzrahmens gegenüber der Mittelachse des Referenzsensors ermittelt und korrigiert wird. Eine Ermittlung und Korrektur eines Ausrichtfehlers erfolgt dabei in einem Prozessor eines Raumfahrzeugs.

Aus der US 6,470,270 B1 ist eine Vorrichtung und ein Verfahren zur Ermittlung einer Lage eines Raumfahrzeugs bekannt, wobei mittels zumindest eines Sternsensors anhand aus einem Sternkatalog ausgewählten Sternen eine Lage des Raumfahrzeugs festgestellt und geregelt wird. Die Ermittlung, Berechnung und Regelung der Lage des Raumfahrzeugs erfolgt in dem Prozessor des Raumfahrzeugs.

Aufgabe der Erfindung ist daher, ein Sternsensorsystem zur Lagebestimmung vorzuschlagen, das eine verbesserte Genauigkeit aufweist und in dem auftretende Ausrichtungsfehler der Sternsensoren automatisch korrigiert werden.

Die Aufgabe wird durch ein Verfahren zur Lagebestimmung eines Flugobjekts mit einem Sensorsystem mit mehreren mittels jeweils einer Optik und eines lichtempfindlichen Matrixdetektors Sternbildausschnitte erfassenden Sternsensoren mit gleichen oder unterschiedlichen Gesichtsfeldern, unterschiedlichen Blickrichtungen und einer Auswerteeinrichtung zur Berechnung von Lageinformation des Flugobjekts anhand eines Vergleichs der erfassten Sternbildausschnitte mit einem Sternkatalog gelöst, wobei die Sternsensoren über ein Bussystem in Signalverbindung zueinander stehen. Jeder einzelne Sternsensor ist vorzugsweise in der Lage, autonom eine Lagebestimmung durchzuführen.

Es hat sich zur Durchführung des Verfahrens als vorteilhaft erwiesen, wenn ein Sternsensor als Referenzsensor wie Mastersensor festgelegt wird. Als Mastersensor sollte ein Sternsensor ausgewählt werden, der eine besonders stabile und definierte Befestigung mit der Plattform des Flugobjektes hat. Erfindungsgemäß wird die Aufgabe der Korrektur von Fehlausrichtungen folgendermaßen gelöst. Ein Sternsensor, der besonders stabil mit der Plattform des Flugkörpers und dessen Koordinatensystem verbunden ist, wird zum Referenz- oder Mastersensor. Seine Messergebnisse dienen als Bezugsgrößen für einen anderen Sensor oder weitere Sensoren.

Die Koordinatensysteme der einzelnen Sternsensoren resultieren aus der x-y-Ebene des Matrixdetektors und der z-Achse in Blickrichtung. Ein Masterkoordinatensystem stellt das Koordinatensystem des Sternsensorsystems dar. Meistens stimmt es nicht mit dem Koordinatensystem des Mastersensors überein. Durch Koordinatentransformation lassen sich die Lagedaten der einzelnen Sternsensoren des Sternsensorsystems in das Masterkoordinatensystem transformieren. Ebenso kann die Transformation des Masterkoordinatensystems auf das Koordinatensystem des Flugobjekts mittels einer Lagematrix beispielsweise in Form einer Richtungscosinusmatrix erfolgen, so dass das Flugobjekt die aktuelle und laufend korrigierte Lage in Form von Eulerwinkeln und/oder Quaternionen erhält.

Die einzelnen Sternsensoren bestehen vorzugsweise aus einem Objektiv, dem Matrixdetektor einer Baugruppe zur Berechnung der Sternvektoren und der Elimination unerwünschter Signale, einer Baugruppe mit Sternkatalog zur Sternidentifikation, einer Baugruppe zur Berechnung der Lageinformation, vorzugsweise nach dem QUEST-Algorithmus, einer Bussteuereinheit mit Businterface, die die Informationen für das Bussystem auswählt, codiert und das Bussystem steuert und die Ausgabebaugruppe der Lageinformation des Masterkoordinatensystems oder des Flugobjektes gemäß dem zugrunde gelegten Koordinatensystem sowie einer Steuereinheit zur Korrektur von Ausrichtungsfehlern. Außerdem besitzt jeder Sternsensor einen Taktgeber und eine Stromversorgungseinheit. Dabei ist es das Ziel, ein Sternsensorsystem hoher Zuverlässigkeit und Genauigkeit zu schaffen. Normalerweise arbeiten die Sternsensoren des Sternsensorsystems mit ihren Baugruppen parallel, das heißt, in heißer Redundanz. Zur Erhöhung der Genauigkeit des Sternsensorsystems werden über das Bussystem die Lageinformationen der Sternsensoren vorzugsweise im Mastersensor zusammengeführt. Außerdem besteht die Möglichkeit, die Lageinformationen der einzelnen Sternsensoren miteinander zu vergleichen, um mögliche Fehlausrichtungen einzelner Sternsensoren festzustellen. Im Sinne einer rationellen und kostengünstigen Fertigung sind die Sternsensoren des Sternsystems bevorzugt gleich aufgebaut und auch einzeln einsetzbar.

Die Lagedaten des zu korrigierenden Sternsensors werden mit denen des Referenzsensors verglichen, die Abweichungen werden in einer Baugruppe der Auswerteeinheit bearbeitet. Die Lagedaten beider Sternsensoren müssen sich auf dasselbe Koordinatensystem beziehen (Koordinatensystem des Referenzsensors, Masterkoordinatensystem des Sensorsystems, Koordinatensystem des Flugobjektes). Die Baugruppe erzeugt ein Korrektursignal für den betreffenden Sternsensor. Zur Korrektur von Fehlausrichtungen gibt es mehrere Möglichkeiten, beispielsweise eine mechanische Ausrichtung, soweit die entsprechenden Sternsensoren auf der Plattform ferngesteuert entlang der drei Raumachsen ausrichtbar angeordnet sind. Dies ist eher die Ausnahme und entsprechend aufwendig. Bevorzugt erfolgt eine Kompensation einer Fehlausrichtung mittels einer auf verschiedenen Datenverarbeitungsebenen, beispielsweise einer Korrektur auf Sternvektorebene, einer Korrektur in der Ebene von verarbeiteten Sternvektoren und/oder einer Korrektur auf Eulerwinkel und/oder Quaternionenebene erfolgender Korrektur der Lageninformationen, bis die Lageinformationen bei einem Vergleiche der fehlerbehafteten Sternsensoren mit dem Referenzsensor ein vorgegebenes Fehlerminimum ergeben.

Die erste Datenverarbeitungsebene betrifft beispielsweise die gemessenen Sternvektoren, das sind Einheitsvektoren im Sensorkoordinatensystem, die mit dem Matrixdetektor erfasst werden. Die Daten sind vorzugsweise einfach vorverarbeitet, indem Fremdlichtquellen aussortiert sind. Sie haben eine Analog-Digital-Umsetzung passiert und beispielsweise eine Subpixelinterpolation wurde bereits ausgeführt. Der Umfang der in dieser Ebene zu übertragenden Daten hängt von der Zahl der im jeweiligen Sternsensor beobachteten Sterne ab. Mit Hilfe des Korrektursignals, das die Form einer Lagematrix hat, werden alle Sternvektoren so transformiert, als ob sie von dem korrekt ausgerichteten Sternsensor gemessen würden,

$$v_{ic} = A_c v_i, \, i = 1, \dots N, \qquad (1)$$

mit der Korrekturmatrix $A_c$, den korrigierten Sternvektoren $v_{ic}$, den gemessenen Sternvektoren $v_i$ und der Anzahl der Sterne N im Gesichtsfeld des Sternsensors. Wegen der sehr kleinen Abweichungen zwischen den Vektoren $v_i$ und $v_{ic}$ kann die Sternbildidentifikation mit den Vektoren $v_i$ oder $v_{ic}$ durchgeführt werden.

In der zweiten, für den Datenaustausch zwischen den Sternsensoren bevorzugten Datenverarbeitungsebene werden aufbereitete Daten übertragen. Für die Erzeugung dieser Daten ist die Sternbildidentifikation notwendig. Es werden Ausdrücke berechnet, die für die Durchführung des QUEST-Algorithmus gebraucht werden. Der Vorteil dieser Form der Datenübertragung ist deren reduzierter Übertragungsaufwand über die Signalverbindung bei einer Erzielung einer mit den Daten der ersten Datenverarbeitungsebene vergleichbaren Genauigkeit.

Da die Lageberechnung bei Sternsensoren bevorzugt nach dem sogenannten QUEST-Algorithmus erfolgt, kann eine Datenvorverarbeitung in der zweiten Datenverarbeitungsebene beispielsweise wie folgt ausgeführt werden: Die Elemente eines die Lage eines Sensorsystems wiedergebenden Quaternionvektors q ergeben sich aus den Eigenwerten der 4x4-Matrix K:

$$K = \begin{pmatrix} S - I\sigma & Z \\ Z' & \sigma \end{pmatrix} \tag{2}$$

mit

$$B = \sum_i v_i \cdot w'_i \tag{3}$$

$$S = B' + B \tag{4}$$

$$\sigma = trace(B) \tag{5}$$

$$Z = \sum_i v_i \times w_i \tag{6}$$

und der 3x3-Einheitsmatrix I.

Unter Anwendung der Korrekturmatrix Ac gehen dann die Gleichungen (3) und (6) für den zu korrigierenden Sensor in die Form

$$B = \sum_i A_c v_i \cdot w'_i \tag{7}$$

$$Z = \sum_i (A_c v_i) \times w_i \tag{8}$$

über.

Die 3x3-Matrix B und der Vektor Z enthalten die gemessenen Sternvektoren $v_i$, die zugehörigen Referenzvektoren $w_i$ aus dem Sternkatalog und die Korrekturmatrix $A_c$. Wegen der additiven Verknüpfung der Sternvektoren in den Gleichungen (7) und (8) können die Matrix B und der Vektor Z als Interfacegrößen der zweiten Datenverarbeitungsebene als vorverarbeitete Sternvektoren verwendet und über das Bussystem übertragen werden:

$$B = \sum B_k \tag{9}$$

$$Z = \sum Z_k \, . \tag{10}$$

$B_k$ und $Z_k$ sind die Daten des k-ten Sternsensors. Auf diese Weise wird eine gegenüber der ersten Datenverarbeitungsebene gleichbleibende Genauigkeit der Sternvektorverknüpfung bei einer geringeren Anzahl von Variablen und damit bei geringerem Übertragungsaufwand erzielt.

In einer dritten Datenverarbeitungsebene werden die Lageinformationen in Form von Eulerwinkeln und/oder Quaternionen von jedem einzelnen Sternsensor bereitgestellt und auf das Masterkoordinatensystem und/oder das Koordinatensystem des Flugobjektes transformiert. Diese Daten können ebenfalls über das Bussystem übertragen werden. Wegen der hohen Genauigkeit weichen die berechneten Eulerwinkel und/oder Quaternionen der einzelnen Sternsensoren im Allgemeinen nur geringfügig voneinander ab.

Der Quaternionvektor enthält vier Elemente. Da die Darstellung der Lage nur drei Elemente erfordert, existiert eine Zusatzbedingung. Diese muss in allen Rechnungen beachtet werden.

Zur Bestimmung der Abweichung der Messergebnisse des zu korrigierenden Sternsensors vom Mastersensor muss daher die Produktregel für die Verknüpfung der Quaternionen angewendet werden,

$$\Delta q_A = \begin{bmatrix} q_{A24} & -q_{A23} & q_{A22} & -q_{A21} \\ q_{A23} & q_{A24} & -q_{A21} & -q_{A22} \\ -q_{A22} & q_{A21} & q_{A24} & -q_{A23} \\ q_{A21} & q_{A22} & q_{A23} & q_{A24} \end{bmatrix} q_{A1}, \qquad (11)$$

mit dem Quaternionvektor $q_{A1} = (q_{A11}\ q_{A12}\ q_{A13}\ q_{A14})'$ am Ausgang des Master- oder Referenzsensors, dem Ausgangsvektor $q_{A2} = (q_{A21}\ q_{A22}\ q_{A23}\ q_{A24})'$ des zu adaptierenden Sternsensors und dem Differenzvektor $\Delta q_A$.

Der Quaternionvektor $q_{A1}$ hat die Funktion des Sollwertes in der Adaptionsschleife. Der Quaternionvektor $\Delta q_A$ gibt die Regelabweichung für die Adaption an, die im Laufe des Adaptionsprozesses minimiert wird. Infolge der sehr kleinen Abweichungen der gemessenen Lagen von Mastersensor und zu korrigierendem Sensor ist das Element $\Delta q_{A4}$ immer nahezu 1. Damit liegt die für den Adaptionsprozess notwendige Information in den Elementen $\Delta q_{A1}$, $\Delta q_{A2}$, $\Delta q_{A3}$.

Der Quaternionvektor $\Delta q_A$ gibt an, wie der zu korrigierende Sternsensor gedreht werden muss, damit er die gleiche Lage anzeigt wie der Referenzsensor bezogen auf das gleiche Koordinatensystem. Mit diesem Vektor können die Lageinformationen für die Informationsfusion vorzugsweise in den genannten drei Ebenen korrigiert werden, der Sternvektorebene, der Ebene der vorverarbeiteten Lagedaten und der Ausgangssignalebene. Mit Hilfe des Quaternionvektors $\Delta q_A$ lässt sich eine Lagematrix berechnen, mit der dann die Lageinformationen des zu korrigierenden Sensors bearbeitet werden können. Der Vektor $\Delta q_A$ enthält neben der nützlichen Information zur Korrektur der Fehlausrichtung auch die Messungenauigkeiten der beiden Sensoren. Es ist daher nicht sinnvoll, die Korrektur in einem Schritt durchzuführen. Ein Wichtungsfaktor w dient der Realisierung eines Glättungsprozesses. Er sorgt für die Stabilität des Adaptionsprozesses und wird der Änderungsgeschwindigkeit einer Fehlausrichtung angepasst. Die für die Korrektur erforderliche Lagematrix $A_c$ wird folgendermaßen berechnet. Den Ausgangspunkt bildet eine Einheitsmatrix

$$A_c(0) \quad = \quad \begin{bmatrix} 1 & 0 & 0 \\ 0 & 1 & 0 \\ 0 & 0 & 1 \end{bmatrix} \qquad (12)$$

In den folgenden Schritten wird diese Matrix mit den Elementen des Fehlervektors $\Delta q_A$ modifiziert,

$$A_c(k+1) = A_c(k) + w \begin{bmatrix} 0 & 2\Delta q_{A3}(k) & -2\Delta q_{A2}(k) \\ -2\Delta q_{A3}(k) & 0 & 2\Delta q_{A1}(k) \\ 2\Delta q_{A2}(k) & -2\Delta q_{A1}(k) & 0 \end{bmatrix} \qquad (13)$$

In Abhängigkeit von der Zahl der Messtakte k nähert sich die Matrix $A_c(k)$ einer optimalen Matrix für die Korrektur der Fehlausrichtung. Die von Null verschiedenen Elemente der durch w gewichteten Matrix stellen die zum Quaternionvektor $\Delta q_A$ gehörenden Eulerwinkel dar. Wegen der sehr kleinen Eulerwinkel können Abweichungen der Werte der Hauptdiagonalen der Matrix $A_c(k)$ von 1 vernachlässigt werden.

Die Matrix ist so mit den Sensorsignalen der drei Verarbeitungsebenen (Sternvektorebene, vorverarbeitete Signale, Ausgangssignalebene) zu verknüpfen, dass die Wirkung der Fehlausrichtung des betreffenden Sensors abgebaut wird.

Die in den Gleichungen (11) bis (13) dargestellten Beziehungen ergeben sich wie folgt: Die nach Gl. (11) berechnete Lageabweichung wird mit der skalaren Größe $0 < w < 1$ gewichtet und gemäß Gl. (12) den aktuellen Werten hinzugefügt. Der Speicher I (3x3) speichert die aktuellen Werte der Matrix $A_c$ um einen Takt. Die auf diese Weise berechnete Lagekorrekturmatrix wird in geeigneter Weise dem zu korrigierenden Sternsensor S zugeführt, so dass die Wirkung einer Fehlausrichtung, beschrieben durch den Quaternionvektor $q_a$, kompensiert wird.

Ein Flugobjekt enthält die für die Durchführung des Verfahrens optimierten Sternsensoren, die insbesondere bezüglich hoher Genauigkeit, geringem Streulichteinfluss, großer mechanischer Stabilität, hoher Strahlenfestigkeit, geringem Energieverbrauch, geringem Gewicht, ausreichender Rechenleistung und ausreichender Größe des Sternkatalogs ausgelegt sind. Bevorzugt werden Sternsensoren mit einem Gesichtsfeld von etwa 20° x 20° beziehungsweise einem kreisrunden Gesichtsfeld von 20° eingesetzt.

Die miteinander vernetzten Sternsensoren eines Sensorsystems zur Durchführung des vorgeschlagenen Verfahrens können insbesondere bei einem Ausfall eines oder mehrerer Sternsensoren oder des Bussystems in herkömmlicher Weise verwendet werden.

Die Erfindung wird anhand der in den Figuren 1 bis 6 gezeigten Ausführungsbeispiele näher erläutert. Dabei zeigen:

Figur 1     eine schematische Darstellung zur Korrektur der Wirkung einer Fehlausrichtung eines Sternsensors, indem die gemessenen Lagen von Referenzsensor (Mastersensor) und zu korrigierendem Sternsensor in demselben Koordinatensystem miteinander verglichen werden und das Fehlersignal zur Kompensation der Wirkung der Fehlausrichtung benutzt wird,

Figur 2     eine schematische Darstellung der schrittweisen Erzeugung einer Korrekturlagematrix $A_c$, die der Kompensation einer Fehlausrichtung, beschrieben durch den Quaternionvektor $q_a$, dient,

Figur 3     eine Darstellung auf der Basis wirksamer Lagematrizen zur Kompensation der Wirkung einer Fehlausrichtung,

Figur 4     eine Darstellung auf der Basis wirksamer Lagematrizen zur Kompensation der Wirkung einer Fehlausrichtung und der Berechnung der Lage des Flugkörpers vom Sternsensorsystem,

Figur 5     eine Darstellung auf der Basis wirksamer Lagematrizen zur Kompensation der Fehlausrichtung mehrerer Sternsensoren

und

Figur 6     das Beispiel eines Kompensationsvorganges.

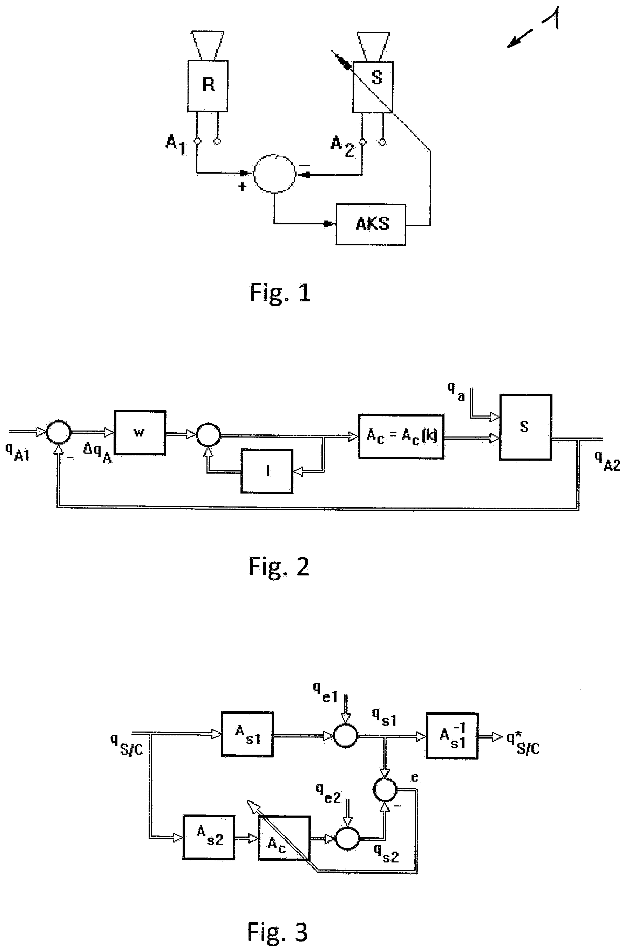

Figur 1 zeigt im Weiteren das in einem nicht dargestellten Flugobjekt installierte Sensorsystem 1, das hier aus zwei Sternsensoren R, S gebildet ist. Der Sternsensor R, der besonders stabil mit einer nicht dargestellten Plattform eines Flugobjekts verbunden ist, dient als Referenzsensor. Die Sternsensoren R, S sind in unterschiedliche Raumrichtungen ausgerichtet. Die Ausgangssignale der Sternsensoren R, S, vorzugsweise als Quaternionen, geben die Lage der Sternsensoren R, S in einem Referenzkoordinatensystem, dem Koordinatensystem des Referenzsensors R oder einem Masterkoordinatensystem des Sternsensorsystems 1 an. Bei einwandfreier Funktion der Sternsensoren R, S müssen sich etwa gleiche Lagedaten an den Ausgängen A1 und A2 bezogen auf das Masterkoordinatensystem ergeben. Damit das Sternsensorsystem 1 die volle Genauigkeit erhält, ist es notwendig, dass eine mögliche Fehlausrichtung des Sternsensors S kompensiert wird. Dazu werden die Lageabweichungen beider Sternsensoren R, S verglichen und ein Fehlersignal, beispielsweise in Form der Differenz der Lagen dazu benutzt, um mechanisch oder vorzugsweise elektronisch den Lagefehler zu kompensieren. Zur Erzeugung des Korrektursignals dient die Baugruppe AKS (adaptives Kompensationssystem). Um eine stabile Messung zu erhalten, wird die Kompensation in genügend kleinen Schritten durchgeführt.

Figur 2 zeigt, wie aus der Lageabweichung, die aus dem Quaternionvektor $q_{A1}$ des Referenzsensors und dem Quaternionvektor $q_{A2}$ des zu korrigierenden Sternsensors nach Gl. (11) gebildet wird. Die nach Gl. (11) berechnete Lageabweichung wird mit der skalaren Größe $0 < w < 1$ gewichtet und gemäß Gl. (12) den aktuellen Werten hinzugefügt. Der Speicher I speichert die aktuellen Werte der Lagematrix $A_c$ um einen Takt. Die auf diese Weise berechnete Lagekorrekturmatrix wird in geeigneter Weise dem zu korrigierenden Sternsensor S zugeführt, so dass die Wirkung einer Fehlausrichtung, beschrieben durch den Quaternionvektor $q_a$, kompensiert wird.

Der Differenzvektor $\Delta q_A$ wird dazu benutzt, rekursiv nach Gl. (13) eine Lagematrix Ac aufzubauen, die das Koordinatensystem oder die Sternvektoren oder die vorverarbeiteten Sensorsignale oder das Ausgangssignal des Sternsensors S so beeinflusst, dass die Wirkung einer möglichen Fehlausrichtung, dargestellt durch das Quaternion $q_a$, abgebaut wird.

Figur 3 beschreibt die Signalflüsse mit Hilfe der Quaternionen. Die Lage des Flugobjektes, gegeben durch das Quaternion $q_{S/C}$, bewirkt in dem Referenzsensor eine Lageinformation in Form des Quaternionvektors $q_{s1}$ des Referenzsensors im Koordinatensystem des Referenzsensors oder im Masterkoordinatensystem des Sternsensorsystems 1. Dieser Quaternionvektor resultiert aus der Transformation $A_{s1}$ der Koordinatensysteme von Flugobjekt und Mastersensor und einem Fehlervektor $q_{e1}$. Durch Transformation des gemessenen Quaternionvektors $q_{s1}$ mit der inversen Lagematrix $A_{s1}^{-1}$ erhält man die gemessene Lage in Form des gemessenen Quaternions $q_{S/C}^*$. Analog dazu wird in einem zweiten Sternsensor der Quaternionvektor $q_{s2}$ erzeugt. Aus der Lageabweichung $e = \Delta q_A$ wird die Lagematrix $A_c$ erzeugt. Diese bewirkt eine Kompensation der Abweichungen zwischen den beiden Sternsensoren, so dass sich die resultierenden Lagematrizen angleichen, so strebt $A_c \cdot A_{s2} \rightarrow A_{s1}$.

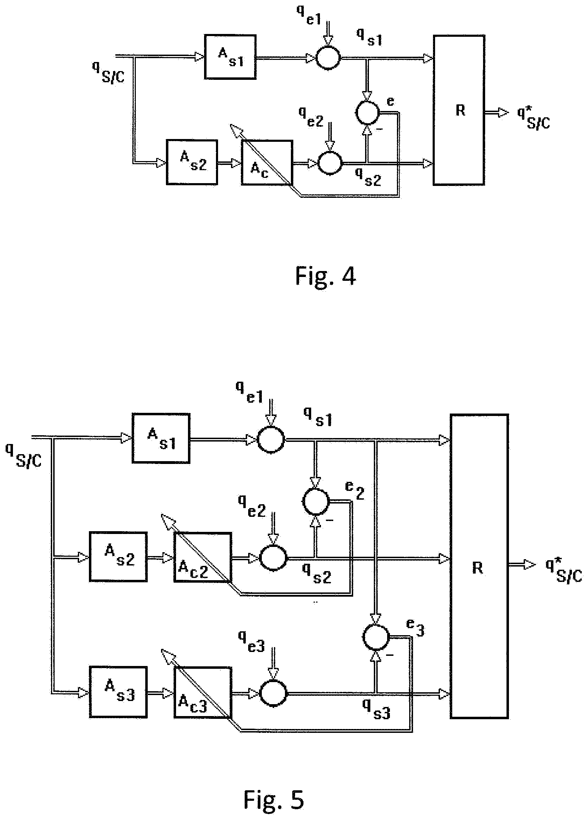

Figur 4 zeigt eine Möglichkeit der Verknüpfung der gemessenen Lage der beiden Sternsensoren zur Erhöhung der Messgenauigkeit in einem Sternsensorsystem. Die Verknüpfung kann auf Ausgangsebene (wie dargestellt) auf der Ebene vorverarbeiteter Lagesignale oder auf Sternvektorebene erfolgen.

In Figur 5 ist entsprechend Figur 4 ein Sternsensorsystem aus drei Sternsensoren dargestellt.

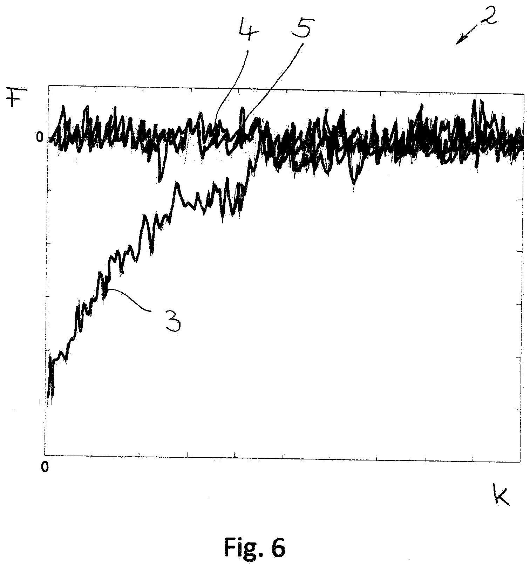

Figur 6 zeigt anhand des Diagramms 2 den Verlauf des Kompensationsvorganges bei einem Sternsensorsystem mit zwei Sternsensoren entsprechend Figur 1. Hierbei ist der Ausrichtungsfehler F des Sternsensors S gegen eine laufend durchgeführte Fehlerkorrektur über den Korrekturindex k von Korrekturzyklen. Die Fehlausrichtung des zweiten Sternsensors S bewirkt einen in der Kurve 3 dargestellten Rollfehler von beispielsweise 10 Bogensekunden. Durch die geometrische Anordnung der Sternsensoren zueinander verhalten sich die Nickfehler in Kurve 4 und der Gierfehler in Kurve 5 nahezu indifferent. Im Verlauf der Korrekturzyklen wird dieser Rollfehler abgebaut, so dass das Sternsensorsystem 1 nach dem Adaptionsvorgang etwa gleiche Fehler in der Nick-, Gier- und Rollkomponente der Lage aufweist. Hier wurde die Fusion der Sensordaten auf der Sternvektorebene durchgeführt. Obwohl alle Sternsensoren des Sternsensorsystems vorzugsweise gleichartig aufgebaut sind, können abhängig von Betriebserfahrungen einige Baugruppen abgeschaltet oder nicht implementiert sein, zum Beispiel um Energie zu sparen.

Bezugszeichenliste

| | |
|---|---|
| 1 | Sternsensorsystem |
| 2 | Diagramm |
| 3 | Kurve |
| 4 | Kurve |
| 5 | Kurve |
| $A_1$ | Ausgang |
| $A_2$ | Ausgang |
| $A_c$ | Lagematrix |
| $A_c(k)$ | von einem Korrekturzyklusindex k abhängige Lagematrix |
| $A_{c2}$ | Lagematrix |
| $A_{c3}$ | Lagematrix |
| $A_{S1}$ | Transformation |
| $A_{S2}$ | Transformation |
| $A_{S2}$ | Transformation |
| $A_{s1}^{-1}$ | inverse Lagematrix |
| AKS | Baugruppe |
| e | Lageabweichung |
| $e_2$ | Lageabweichung |
| $e_3$ | Lageabweichung |
| F | Ausrichtungsfehler |
| k | Korrekturindex |
| l | Speicher |
| $q_a$ | Quaternionvektor einer Fehlausrichtung |
| $q_{A1}$ | Quaternionvektor des Referenzsensors |
| $q_{A2}$ | Quaternionvektor des zu korrigierenden Sternsensors |
| $q_{a1}$ | Lagevektor des Referenzsensors |
| $q_{a2}$ | Lagevektor des zu korrigierenden Sternsensors |
| $q_{e1}$ | Fehlervektor des Referenzsensors |
| $q_{e2}$ | Fehlervektor des zu korrigierenden Sternsensors |
| $q_{e3}$ | Fehlervektor des zu korrigierenden Sternsensors |
| $q_{s1}$ | Quaternionvektor des Referenzsensors |
| $q_{s2}$ | Quaternionvektor des zu korrigierenden Sternsensors |
| $q_{s3}$ | Quaternionvektor des zu korrigierenden Sternsensors |
| $q_{S/C}$ | Quaternion |
| $q_{S/C}^{*}$ | gemessenes Quaternion |
| R | Sternsensor (Referenzsensor) |
| S | Sternsensor (zu korrigierender Sternsensor) |
| w | Wichtungsfaktor |

**EP 2 929 362 B1**

$\Delta q_A$     Differenzvektor

**Patentansprüche**

**1.** Verfahren zur automatischen Korrektur von Ausrichtungsfehlern von Sternsensoren eines Sternsensorsystems (1) zur Lagebestimmung eines Flugobjekts mit mehreren auf einer Plattform aufgenommenen Sternsensoren (R, S) und einer Auswerteeinrichtung von Lageinformationen der Sternsensoren (R, S), wobei jeder einzelne Sternsensor in der Lage ist, autonom eine Lagebestimmung durchzuführen und die Sternsensoren über ein Bussystem in Signalverbindung zueinander stehen, wobei ein gegenüber zumindest einem weiteren Sternsensor (S) des Sternsensorsystems (1) bevorzugt stabil aufgenommener Sternsensor (R) als Referenzsensor vorgesehen wird und eine von diesem ermittelte Lage als Bezugsinformation verwendet wird, zwischen den Bezugsinformationen und Lageinformationen des zumindest einen weiteren Sternsensors (S) laufend ein Fehlersignal ermittelt wird und mit dem ermittelten Fehlersignal der Ausrichtungsfehler des zumindest einen weiteren Sternsensors (S) korrigiert wird, wobei bei einem vorliegenden Fehlersignal eines Sternsensors (S) eine Korrektur dessen Lageinformationen auf einer Quaternionen-Ebene erfolgt, ein Quaternionvektor ($q_{A1}$) eine Sollwertfunktion in einer Adaptionsschleife hat und ein Quaternionvektor ($\Delta q_A$) eine Regelabweichung für eine Adaption angibt, die im Laufe eines Adaptionsprozesses minimiert wird.

**2.** Verfahren nach Anspruch 1, **dadurch gekennzeichnet, dass** Bezugsinformationen und Lageinformationen des zumindest einen weiteren Sternsensors (S) in einem Masterkoordinatensystem dargestellt, das Fehlersignal in diesem Masterkoordinatensystem ermittelt und auf das Koordinatensystem des zumindest einen weiteren Sternsensors (S) rücktransferiert wird.

**3.** Verfahren nach Anspruch 1 oder 2, **dadurch gekennzeichnet, dass** bei einem vorliegenden Fehlersignal eines Sternsensors (S) eine mechanische Korrektur des fehlerbehafteten Sternsensors (S) vorgenommen wird.

**4.** Verfahren nach einem der Ansprüche 1 oder 2, **dadurch gekennzeichnet, dass** bei einem vorliegenden Fehlersignal eines Sternsensors (S) eine Korrektur dessen Lageinformationen in einer Verarbeitungsebene der Sternvektoren erfolgt.

**5.** Verfahren nach einem der Ansprüche 1 oder 2, **dadurch gekennzeichnet, dass** bei einem vorliegenden Fehlersignal eines Sternsensors (S) eine Korrektur dessen Lageinformationen in einer Ebene mittels eines Sternkatalogs vorverarbeiteter Sternvektoren erfolgt.

**6.** Verfahren nach einem der Ansprüche 1 oder 2, **dadurch gekennzeichnet, dass** bei einem vorliegenden Fehlersignal eines Sternsensors (S) eine Korrektur dessen Lageinformationen auf einer Ebene des Eulerwinkels erfolgt.

**7.** Verfahren nach einem der Ansprüche 1 bis 6, **dadurch gekennzeichnet, dass** eine Korrektur der Ausrichtung anhand der ermittelten Fehlersignale so lange erfolgt, bis eine vorgegebene Fehlerabweichung der Lageinformationen zwischen dem Referenzsensor und dem zumindest weiteren Sternsensor (R) unterschritten ist.

**8.** Verfahren nach einem der Ansprüche 1 bis 7, **dadurch gekennzeichnet, dass** bei zumindest zwei fehlerbehafteten Sternsensoren eine aus einem Vergleich jeweils eines Sternsensors mit dem Referenzsensor gewonnene Korrekturgröße auf den jeweils anderen Sternsensor zu dessen zusätzlicher Korrektur angewendet wird.

**Claims**

**1.** Method for the automatic correction of alignment errors in star trackers of a star tracker system (1) for determining the orientation of a flying object by a plurality of star trackers (R, S) mounted on a platform and a device for evaluating orientation information of the star trackers (R, S), wherein each individual start tracker is in a position to determine an orientation autonomously and the star trackers are in signal connection with one another via a bus system, wherein a star tracker (R), which is mounted preferably in a stable manner relative to at least one additional star tracker (S) of the star tracker system (1), is provided as reference tracker, and an orientation determined by the latter is used as reference information, an error signal is determined continuously between the reference information and the orientation information of the at least one additional star tracker (S) and by means of the determined error signal the orientation error of the at least one additional star tracker (S) is corrected, wherein in the presence of an

8

error signal of a star tracker (S) a correction is made of its orientation information on a quaternion level, a quaternion vector ($q_{A1}$) has a target value function in an adaptation loop and a quaternion vector ($\Delta_{qA}$) indicates a control deviation for an adaptation which is minimised during an adaptation process.

2. Method according to claim 1, **characterised in that** reference information and orientation information of the at least one additional star tracker (S) is represented in a master coordinate system, the error signal being ascertained in this master coordinate system and transferred back to the coordinate system of the at least one additional star tracker (S).

3. Method according to claim 1 or 2, **characterised in that** if there is an error signal of a star tracker (S), a mechanical correction of the erroneous star tracker (S) is carried out.

4. Method according to any of claims 1 or 2, **characterised in that** if there is an error signal of a star tracker (S), a correction of its orientation information is carried out in a processing level of star vectors.

5. Method according to any of claims 1 or 2, **characterised in that** if there is an error signal of a star tracker (S), a correction of its orientation information is carried out in a level by means of a star catalogue of preprocessed star vectors.

6. Method according to any of claims 1 or 2, **characterised in that** if there is an error signal of a star tracker (S), a correction of its orientation information is carried out in a level of the Euler angle.

7. Method according to any of claims 1 to 6, **characterised in that** a correction of the alignment on the basis of the determined error signals continues to be carried out until a predefined error deviation of the orientation information between the reference tracker and the at least one additional star tracker (R) is fallen below.

8. Method according to any of claims 1 to 7, **characterised in that** in the case of at least two of the star trackers being erroneous, a correction quantity obtained from a comparison of one of the star trackers with the reference tracker is used for the respective additional star tracker for purposes of its additional correction.

**Revendications**

1. Procédé de correction automatique d'erreurs d'alignement de capteurs d'étoiles d'un système de capteurs d'étoiles (1) pour déterminer la position d'un objet volant avec plusieurs capteurs d'étoiles (R, S) montés sur une plate-forme et un dispositif d'évaluation des informations de position des capteurs d'étoiles (R, S), chaque capteur d'étoiles individuel étant capable d'effectuer de manière autonome une détermination de position, et les capteurs d'étoiles étant en liaison de signal entre eux par un système de bus, dans lequel un capteur d'étoiles (R), qui est de préférence monté de manière stable par rapport à au moins un autre capteur d'étoiles (S) du système de capteurs d'étoiles (1), est prévu comme capteur de référence et une position déterminée par ce dernier est utilisée comme information de référence, un signal d'erreur est déterminé en permanence entre l'information de référence et l'information de position dudit au moins un autre capteur d'étoiles (S) et l'erreur d'alignement dudit au moins un autre capteur d'étoiles (S) est corrigée avec le signal d'erreur déterminé, dans lequel, en présence d'un signal d'erreur d'un capteur d'étoiles (S), une correction de son information de position est effectuée sur un plan de quaternion, un vecteur de quaternion ($q_{A1}$) a une fonction de consigne dans une boucle d'adaptation et un vecteur de quaternion ($\Delta q_A$) indique un écart de réglage pour une adaptation qui est minimisé au cours d'un processus d'adaptation.

2. Procédé selon la revendication 1, **caractérisé en ce que** des informations de référence et des informations de position dudit au moins un autre capteur d'étoiles (S) sont représentées dans un système de coordonnées principal, le signal d'erreur est déterminé dans ce système de coordonnées principal et est retransmis au système de coordonnées dudit au moins un autre capteur d'étoiles (S).

3. Procédé selon la revendication 1 ou 2, **caractérisé en ce que** si un signal d'erreur d'un capteur d'étoiles (S) est présent, une correction mécanique du capteur d'étoiles (S) défectueux est effectuée.

4. Procédé selon l'une des revendications 1 ou 2, **caractérisé en ce que**, si un signal d'erreur d'un capteur d'étoiles (S) est présent, une correction de son information de position est effectuée dans un plan de traitement des vecteurs d'étoiles.

5. Procédé selon l'une des revendications 1 ou 2, **caractérisé en ce que**, si un signal d'erreur d'un capteur d'étoiles (S) est présent, une correction de son information de position est effectuée dans un plan au moyen d'un catalogue d'étoiles de vecteurs d'étoiles prétraités.

6. Procédé selon l'une des revendications 1 ou 2, **caractérisé en ce que**, si un signal d'erreur d'un capteur d'étoiles (S) est présent, une correction de son information de position est effectuée dans un plan de l'angle d'Euler.

7. Procédé selon l'une des revendications 1 à 6, **caractérisé en ce qu'**une correction d'alignement est effectuée à l'aide des signaux d'erreur déterminés jusqu'à parvenir en dessous en dessous d'un écart d'erreur prédéterminé de l'information de position entre le capteur de référence et au moins l'autre capteur d'étoile (R).

8. Procédé selon l'une des revendications 1 à 7, **caractérisé en ce que**, dans le cas d'au moins deux capteurs d'étoile défectueux, une grandeur de correction obtenue à partir d'une comparaison d'un capteur d'étoiles respectif avec le capteur de référence est appliquée à l'autre capteur d'étoiles respectif pour sa correction supplémentaire.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1111402 A1
- US 6691033 B1
- US 6470270 B1